# EUROPÄISCHE PATENTSCHRIFT

(11) **EP 1 638 101 B1**
(45) Veröffentlichungstag und Bekanntmachung des Hinweises auf die Patenterteilung: **11.03.2009**
(21) Anmeldenummer: 04022235.8
(22) Anmeldetag: 17.09.2004
(51) Int. Cl.: G11B 27/034, H04N 5/222

(54) **Video assist System zur effizienten Videoaufzeichnung für die Wiedergabe auf mehreren Displays**
Video assist system for efficient recording of video data to facilitate reproduction on multiple displays
Systeme d'assistance vidéo pour l'enregistrement de vidéo de manière efficace afin de faciliter la reproduction sur des affichages multiples

(43) Veröffentlichungstag der Anmeldung: 22.03.2006
(73) Patentinhaber: Vantage Film GmbH, 92637 Weiden (DE)
(72) Erfinder: Prell, Bernhard, 86391 Stadtbergen (DE); Märtin, Peter, 92637 Weiden (DE)
(74) Vertreter: Ruschke, Hans Edvard

(56) Entgegenhaltungen:
- WO-A-99/65238
- US-A1- 2002 106 184
- US-A1- 2003 231 259
- US-B1- 6 570 581
- US-B1- 6 661 426
- TROLLTECH: "MANUAL REFERENCE PAGES - QMOVIE (3QT)"[Online] 10. November 2003 (2003-11-10), XP002321113 Gefunden im Internet: URL:http://server1.belchfire.net/protected -cgi-bin/manServer_107.pl/usr/share/man/ma n3/QMovie.3qt> [gefunden am 2005-03-11]
- TROLLTECH: "QCanvas Class Reference"[Online] 2000, XP002321114 Gefunden im Internet: URL:http://poolmgr.informatik.uni-freiburg .de/extern/doc/qt/qcanvas.html> [gefunden am 2005-03-11]
- TROLLTECH: "Qt 3.1 Whitepaper"[Online] 2003, XP002321115 Gefunden im Internet: URL:www.inf.hs-zigr.de/~bauer/GUI/Qt.pdf> [gefunden am 2005-03-11]

## Beschreibung

### Technisches Gebiet

Die vorliegende Erfindung betrifft ein Verfahren zur Schaffung einer Datenstruktur zur Bildaufzeichnung, -verarbeitung und asynchronen Wiedergabe. Weiterhin betrifft die Erfindung ein Computerprogramm zur Schaffung einer solchen Datenstruktur, das in eine Datenverarbeitungsanlage geladen werden kann und bei seiner Ausführung die Verfahrensschritte ausführt, sowie ein Datenverarbeitungssystem, das eine Einrichtung zum Ausführen der Verfahrensschritte umfaßt.

### Hintergrund und Stand der Technik

In den letzten Jahren hat sich die Aufzeichnung, -bearbeitung und -wiedergabe von Filmen zunehmend von analogen auf digitale Medien verlagert. Grund für diese Entwicklung waren nicht zuletzt die multimedialen Möglichkeiten, die das digitale Medium bietet, was z.B. den interaktiven Umgang mit digitalen Videos betrifft, sowie die flexibleren Speichermöglichkeiten.

Jedoch werden an die digitalen Systeme schon bei der Aufnahme, Verarbeitung und Wiedergabe eines einzelnen Videos hohe Anforderungen gestellt, was Rechenleistung und Steuerungsanforderungen anbelangt - ganz zu schweigen von den Anforderungen im Falle mehrerer Videos, also z.B. bei der simultanen Wiedergabe mehrerer unterschiedlicher Videos und/oder Live-Bilder.

Aufgrund der hohen Rechenleistung und Steuerungsanforderungen, die erforderlich sind, um mehrere solche unterschiedliche Display-Aufgaben simultan zu bearbeiten, war es bei der kommerziell erhältlichen Software bisher lediglich möglich, einen einzelnen Strom von Videoinhalten synchron auf unterschiedliche Displays zu verteilen. Auf allen angeschlossenen Display-Geräten konnte daher simultan immer nur der gleiche Videoinhalt betrachtet werden.

In der US 2003/0231259 A1 wird die Möglichkeit beschrieben, mehrere Datenquellen in einem Speicherbereich abzulegen und anschließend in Echtzeit auf einem Ausgabegerät darzustellen. Der Kontext ist dabei der Bereich digitales Fernsehen, und die Bilddaten werden von einer Hardwareeinrichtung in einen gemeinsamen Speicher gestellt und entsprechend der Bildwiederholungsrate (75Hz) gemeinsam am Bildschirm ausgegeben. Die Bilder werden typischerweise nicht überlagert, sondern in ein Fensterlayout mit eingeschränkter Flexibilität des Windowmanagers eingebettet.

Im Kontext der Bewegung realer Akteure in computergenerierten 3D-Szenen ("computer generated imagery" - CGI) incl. von Spezialeffekten bewegt sich die US 6,570,581 B1. Dabei müssen die Akteure so agieren, als sähen sie die CGI tatsächlich - in der Regel wird die CGI jedoch erst nach der Live-Aufzeichung mit den Akteuren erstellt und dann in der Postproduction damit überlagert. Um zeit-und kostenaufwendige Nachbearbeitungen zu vermeiden, die sich daraus ergeben können, daß CGI und Bewegungen der Akteure später nicht zusammenpassen, offenbart die US 6,570,581 B1 ein System, mit dem einerseits die CGI erstellt wird und das andererseits die Aufzeichnung der realen Akteure empfängt. Das System mischt dann beide Signale auf einem Bildschirm.

In der Klasse QMovie (3qt) sind Methoden und Datenstrukturen zum inkrementellen Laden von Animationen oder Bildern offenbart. Dabei startet der Film, sobald ein QMovie-Objekt erzeugt worden ist - ist der letzte Frame des Films abgespielt, kann wieder zurück zum Startpunkt gegangen werden, falls eine solche Loop zuvor definiert worden ist. QMovie-Objekte sind allerdings "explicitly shared", d.h. um ununabhängige Filme zu erstellen, müssen diese separat konstruiert werden.

### Kurze Zusammenfassung der Erfindung

Es ist die Aufgabe der vorliegenden Erfindung, trotz der bei digitalen Systemen bestehenden Probleme im Hinblick auf Rechenleistung und Steuerungsanforderungen eine Systemarchitektur zu schaffen, die eine Aufzeichnung, Bearbeitung und Wiedergabe mehrere unterschiedlicher Videoströme ermöglicht.

Das wird erreicht durch ein Verfahren mit den Merkmalen des Anspruchs 1. Gemäß der vorliegenden Erfindung wird eine Datanstruktur geschaffen, mit der gleichzeitig verschiedene multimediale Inhalte angezeigt und/oder wiedergegeben werden können. So kann z. B. auf einem Touchscreen-Bildschirm ein auf Festplatte gespeicherter Film angezeigt werden, während auf einem Video-Ausgang permanent das Live-Bild von einer der anschließbaren Kameras zu sehen ist. Gleichzeitig könnte ein über ein Netzwerk (auch kabellos über WLAN) angeschlossenes Client-System einen anderen bereits abgespeicherten Film abspielen. Damit entsteht eine echte Multitasking-Umgebung für Regie- und Kameraarbeiten am Drehort.

Die erfindungsgemäße Datenstruktur sieht ferner vor, dass z. B. ein von Platte wiedergegebener Film mit dem laufenden Live-Bild überlagert werden kann, verschiedene Live-Bilder übereinander gelegt werden können und spezielle Mix-Takes (Überlagerung mehrerer auf Platte gespeicherter Filme) angezeigt werden können - auch mit der Möglichkeit, zusätzlich noch das Live-Bild darüber zu legen.

Mit der neu entwickelten Datenstruktur werden daher erstmals im Filmumfeld ohne zusätzlichen Hardware-Aufwand zwei wertvolle neue Anwendungsbereiche erschlossen: Einerseits können mehrere unterschiedliche digitale Inhalte - wie gespeicherte Videosequenzen und/oder live aufgenommene Videosignale - in Echtzeit an mehrere direkt oder über (W)LAN angeschlossene Display-Endgeräte verteilt werden, wobei sie vorher zusätzlich mit berechneten Filtereffekten versehen werden können (sogenannter asynchroner Modus); andererseits können mehrere unterschiedliche digitale Inhalte - wie gespeicherte Videosequenzen, und/oder live aufgenommene Videosignale - in Echtzeit überlagert und gemischt werden (sogenannter Mix & Overlay-Modus), wobei der dabei entstehende Videostrom wieder wie ein digitaler Inhalt behandelt werden kann. Bisher gibt es kein vergleichbares digitales und softwaregesteuertes Video-Assist-System, bei dem ein derartiges Multitasking schon am Drehort möglich ist: während z.B. der Kameramann die Aufnahme von Kamera A und/oder Kamera B auf den an das erfindungsgemäße System angeschlossenen TV-Out-Monitoren überwacht, kann sich der Regieassistent gleichzeitig am Hauptdisplay (Touchscreen) darum kümmern, eine Reihe von bereits vorhandenen Takes auszuwählen und für den Schnitt zusammenzustellen. Bisher waren diese Maßnahmen nur alternativ möglich: entweder Aufnahme oder Nachbearbeitung. Durch die Möglichkeit der Überlagerung verschiedener Kanäle ist es anhand der vorliegenden Erfindung weiterhin erstmals möglich, mit einem kompaktem Gerät direkt am Drehort verschiedenste Aufnahmeeffekte zu erzielen, die bisher ebenfalls nur durch Nachbearbeitung im Studio möglich waren. Diese Möglichkeiten sind beim heutigen Stand der Mikroprozessor- und Softwaretechnik nicht zu erzielen ohne das erfindungsgemäße Verfahren zur Schaffung einer Datenstruktur.

Nach der vorliegenden Erfindung ist ein Verfahren gemäß Anspruch 1 vorgesehen.

Besonders vorteilhafte Ausgestaltungen ergeben sich aus den abhängigen Ansprüchen.

### Kurze Beschreibung der Zeichnung

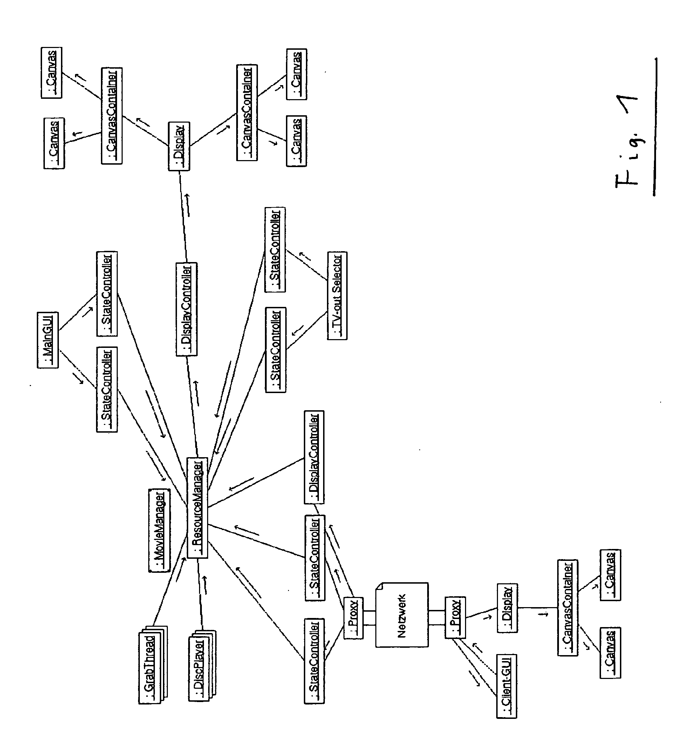

- Fig. 1: zeigt ein UML Collaboration Model der asynchronen Systemarchitektur.

### Detaillierte Beschreibung der bevorzugten Ausführungsformen

In einer Eingangsschicht liest das erfindungsgemäße Datenverarbeitungssystem die von einer Videokamera einlaufenden Bilder über Video-Grabberkarten oder Festplatten ein. Dabei kann für jede anschließbare Filmkamera eine eigene Grabberkarte vorgesehen sein; weiterhin können die Festplatten als RAID-0-Array konfiguriert sein. In der Eingangsschicht des erfindungsgemäßen Computerprogramms ist zu diesem Zweck für jede Grabberkarte ein eigener leichtgewichtiger Prozeß, ein sogenannter Thread, vorgesehen, der hier mit GrabThread bezeichnet wird und die Bilddaten vom Grabberkarten-Treiber anfordert und erhält. Zusätzlich steuert jeder GrabThread einen ihm zugeordneten writeThreaa, der die Bilder während einer Aufnahme - z.B. in JPEGkomprimierter Form - auf die Festplatte schreibt. Der Grund für diese Arbeitsteilung des Einlesens und Schreibens besteht darin, daß der GrabThread keine Zeit durch Schreiben auf die Festplatte verlieren sollte, während er die Bilddaten von der Grabberkarte einliest. Um sicherzustellen, daß die Threads tatsächlich nebenläufig arbeiten, können mehrere Intel-Xeon-CPUs eingesetzt werden, die zusätzlich im Hyper-Threading-Modus (Intel-Bezeichnung für Simultanes Multithreading) arbeiten. Um einen so aufgezeichneten Film dann von Festplatte wiedergeben zu können, wird ein Objekt benötigt, das hier als DiscPlayer bezeichnet wird und nurlesend auf einer zentralen Liste der aufgenommenen Takes arbeitet, wobei jeder Take wiederum eine Liste aller Einzelbilder, sogenannter Frames, hat. Dabei hat der DiscPlayer einen Iterator, der auf den gerade aktiven Take, und einen Iterator, der auf den gerade aktiven Frame zeigt. Bei diesen Iteratoren handelt es sich um eine objektorientierte gekapselte Form eines Zeigers. Er kann vor- oder zurückgeschaltet, d.h. inkrementiert oder dekrementiert, werden und zeigt dann dementsprechend auf das nächste oder vorhergehende Objekt der Liste, auf das mit Hilfe des Iterators zugegriffen werden kann.

Um unabhängig gleichzeitig verschiedene Filme von Festplatten (oder auch anderen Speichermedien) wiedergeben zu können, z. B. auf dem Hauptsystem und einem Client-Endgerät, werden mehrere DiscPlayer-Objekte benötigt, die alle auf einer zentralen Take-Liste arbeiten. Veränderungen an der Take-Liste (Löschen, Einfügen etc.) und an einzelnen Takes (Schnittänderungen, Änderung der simulierten Framerate etc.) werden jeweils von einem nur einmal vorhandenen MovieManager durchgeführt, der wiederum alle DiscPlayer über derartige Änderungen informiert. Neben der Wiedergabe der auf diese Weise gespeicherten Filmbilder soll aber auch die Wiedergabe direkt über die Grabberkarten einlaufender Livebilder möglich sein.

Die zentrale Verwaltung der gesamten Wiedergabe erfolgt über den sogenannten ResourceManager. Zunächst ist anzumerken, daß ein dargestelltes Video-Bild, das auf einer bestimmten Leinwand - hier Canvas genannt - angezeigt wird, aus mehreren Schichten zusammengesetzt sein kann. Aus diesem Grund hat eine Canvas eine wechselnde Anzahl von Schichten - hier Layers genannt. Jede Schicht kann eigene bildverändernde Attribute gesetzt haben, wie Spiegelung um die X-und Y-Achse, Schwarz-Weiß, invertiert, gezoomt, maskiert und andere. Mehrere Canvases werden wiederum in einem Container - hier CanvasContainer genannt - zusammengefasst. Der Grund, diese Möglichkeit vorzusehen, besteht darin, daß mehrere Canvases z.B. benötigt werden, wenn Live-Bilder mehrerer Kameras gleichzeitig auf einem einzelnen Ausgabemedium (z.B. dem Touchscreen) dargestellt werden müssen. Der CanvasContainer kümmert sich dann um das Geometriemanagement der einzelnen Canvases, d.h. um deren Positionierung und Größe im Zieldisplay.

Allgemein gesagt gibt es also auf der einen Seite eine Menge von Bildern, die von X DiscPlayern geschickt werden, sowie eine Menge von Bildern, die direkt von Y Grabberkarten stammen - auf der anderen Seite gibt es gleichsam Z "interessante" Teilmengen davon, die auf den Displays angezeigt werden sollen. Es muß daher dafür Sorge getragen werden, daß für jedes Display eine Art individuelles "Paket geschnürt" wird, das die gewünschte Anzeige für dieses Display liefert. Als wichtigste Schnittstelle nach außen dient daher die Funktion ShowPackage, die eine Menge von Bildern aus spezifizierten Schichten an die Display-Endgeräte liefert, wobei jedem Display ein individuelles ShowPackage zugeordnet ist. Durch die gezielte Auswahl unterschiedlicher Teilmengen für die von ShowPackage an das jeweils zugehörige Display gelieferten Bilder können vor der eigentlichen Ausgabe für verschiedene Display-Endgeräte unterschiedliche Ausgabevarianten komponiert werden, z. B. gleichzeitig mehrere voneinander unabhängige Bilder, die nebeneinander dargestellt werden, und/oder unterschiedliche Überlagerungen bzw. Effekte für die verschiedenen angeschlossenen Displays.

Der schon erwähnte ResourceManager stellt mit Hilfe einer Liste von Zustandsobjekten - den sogenannten StateController-Objekten - die ShowPackages für die Displays zusammen. Jeder StateController ist genau einer Canvas zugeordnet, die über displayID, canvasContainerNr und canvasNr adressiert wird. Im Falle der Wiedergabe von auf Festplatte gespeicherten Filmbildern steuert der ResourceManager auch die bereits erwähnten GrabThreads und empfängt von ihnen und den DiscPlayern die Bilder. Die DiscPlayer werden dabei über die discPlayerID adressiert. Dabei besteht eine Einschränkung darin, dass jede canvas nur von einem DiscPlayer gleichzeitig Bilder empfangen kann. Mix&Overlay-Takes werden also nicht über mehrere DiscPlayer realisiert, sondern ein DiscPlayer schickt in diesem Fall bereits ein ShowPackage mit mehreren Bildern. Im Falle der Wiedergabe von Live-Bildern gibt es diese Einschränkung nicht. Die sogenannte ChannelList stellt in diesem Fall eine Art Wunschliste dar, in der die Grabber-Kanäle aufgeführt sind, von denen die canvas gleichzeitig Bilder empfangen und darstellen soll. Eine Zustandsvariable -hier state genannt - beschreibt schließlich noch, ob die canvas nur die Bilder vom DiscPlayer, nur Live-Bilder, oder Festplatten- und LiveBilder überlagert empfangen soll. Der StateController benötigt also die folgenden Parameter:
StateController:
displayID
canvasContainerNr
canvasNr
discPlayerID
channelList
state

Da es mehrere Displays geben kann, z. B. eins für das Hauptgerät und eins für jeden Display-Client, wird auch dafür eine Verwaltungsstruktur benötigt. Dabei dient der sogenannte DisplayController als Repräsentant eines Displays im ResourceManager. Er enthält mehrere Listen, die benötigt werden, um die ShowPackages zusammenzusetzen, sowie einen Zeiger auf das eigentliche Display - dieses erhält dann genau dasjenige ShowPackage, das nur für dieses Display bestimmt ist.

Die Struktur der "Transportschicht", in der die Übergabe der Bilder an die Displays erfolgt, ist durch die Anforderung bestimmt, daß ein Bild für jedes Display auch nur ein einziges Mal in den Graphikspeicher kopiert wird, da genau diese Operation die (zeit)aufwendige und teure ist - diese Anforderung hat sich in der vorliegenden Erfindung unter anderem in der Trennung von Bild und Anzeigeziel niedergeschlagen. Aus den obigen Erläuterungen sollte deutlich geworden sein, daß ein Bild, das auf dem Display angezeigt wird, nicht mehr nur ein einfaches Bild ist, sondern aus mehreren Bildern besteht, die jeweils um Adressinformationen erweitert sind. Der beim bisher von der Vantage Film GmbH vertriebenen Harddisk-Recorder "PSU" ® realisierte Fall, daß ein Bild auf einer bestimmten canvas angezeigt wird, wird damit zum Spezialfall der erweiterten Anzeigestruktur gemäß der vorliegenden Erfindung.

Diese Anzeige-Datenstruktur erhält wie die schon erwähnte Funktion ebenfalls den Namen ShowPackage und besteht aus einer Liste von sogenannten ShowItems. Die ShowItem-Liste wird von der Anwendung generiert und ist von der vom Benutzer eingestellten dynamisch veränderbaren Display-Konfiguration abhängig. Jedes ShowItem enthält genau ein Bild und eine Liste von möglichen Anzeigezielen - hier als ShowTargets bezeichnet. Das ShowTarget wiederum gibt detailliert das Anzeigeziel an. Aufbau und Verhältnis von ShowPackage, ShowItem und ShowTarget zueinander gestalten sich daher wie folgt:

| ShowPackage: | ShowItem: | ShowTarget: |
|---|---|---|
| * Liste v. ShowItems | * Bild | containerNr; |
| | * Liste v. ShowTargets | canvasNr.; |
| | | layerNr; |

Jedes Bild mit dem gleichen Inhalt steht nur *einmal* in der ShowItem-Liste des ShowPackage. Soll es auf mehreren Layers erscheinen, hat die Liste der ShowTargets - die es, wie der obigen Aufstellung zu entnehmen ist, für jedes Bild gibt - entsprechend viele Einträge. Dies hat den Hintergrund, daß jedes Kopieren eines Bildes - z. B. vom Hauptspeicher in den Grafikspeicher der Grafikkarte - relativ viel Zeit kostet. Durch diese Struktur wird also der oben erwähnten Anorderung Rechnung getragen, indem die Kopierzeit auf die minimal erforderliche reduziert wird.

Die Anzeige auf dem Display, die den "Weg" der Bilder abschließt, wird mit der Grafiksprache OpenGL realisiert, wobei zusätzliche Effizienzanpassungen für den in der vorliegenden Erfindung eingesetzten Nvidia-Grafikprozessor vorgenommen wurden. Ein wesentlicher Vorteil der Verwendung von OpenGL besteht darin, dass die meisten Bild-Effekte -hier PictureSettings genannt - damit von der Grafikprozessor-Hardware ausgeführt werden und somit deutlich weniger CPU-Rechenzeit auf den Xeon-Hauptprozessoren benötigen. Die Haupt-CPUs müssen lediglich dafür sorgen, dass sich immer alle der parallel darzustellenden, zu überlagernden oder durch Effekte zu verändernden Bilder in den Verarbeitungs-Pipelines des Grafikprozessors befinden. Zu Beginn des Berechnungsfensters von 40 ms (PAL) oder 33 ms (NTSC) werden daher die von der Anwendung benötigten Bilder von den Haupt-CPUs vom Hauptspeicher in den Bildspeicher der Grafikkarte übertragen. Mit der aktuellen Hardware wird pro Bild eine Übertragungszeit von 2 ms benötigt - sollen beispielsweise fünf Bilder überlagert werden, kostet das 10 ms. Bei PAL-Ausgabegeräten stehen damit noch 30 ms für die Berechnung der Effekte und Überlagerungen und die Ausgabe an die Endgeräte zur Verfügung. Bilder wie z. B. fest eingestellte Masken oder Overlays bleiben im Grafikspeicher und müssen nicht in jedem Zeitfenster erneut an den Grafikprozessor übertragen werden. Mit dem in der ebenfalls anhängigen Anmeldung "Verfahren zur Schaffung einer Cache-Struktur für den Schnellzugriff auf getrennt gespeicherte Objekte" offenbarten Verfahren kann darüberhinaus dafür gesorgt werden, dass immer genügend Videobilder auf möglicherweise unterschiedlichen Takes im Hauptspeicher zur Verfügung stehen.

Für den bisher von der Vantage Film GmbH vertriebenen Harddisk-Recorder "PSU"® existieren als Effekte bereits X/Y-Spiegelung, Zoom und Mask sowie Schwarz/Weiß-Darstellung, die gemäß der vorliegenden Erfindung nun alle vom Grafikprozessor berechnet werden. Die bereits in diesem Harddisk-Recorder realisierte Overlay-Variante mit einem fixen Bild wird gemäß der vorliegenden Erfindung nun auch in die Grafik-CPU verlagert, ebenso wie die einem aktuell abgespielten Take überlagerte Rampengrafik. Eine Rampengrafik stellt den Verlauf der Kamerageschwindigkeit während des Takes dar und zeigt dynamisch an, wo sich das gerade dargestellte Bild innerhalb der Rampe befindet. Die Rampengrafik kann nun sogar gleichzeitig mit eingeschaltetem Zoom-Effekt aktiv sein, was beim bisherigen Harddisk-Recorder nicht möglich war.

Technisch ist es möglich, in jedem einzelnen Layer andere oder keine Bildeffekte zu aktivieren und pro Display-Engerät mehrere Layers zu überlagern. Durch Nutzung der Funktion ShowPackage kann man beispielsweise dafür sorgen, dass die einem Farbbild überlagerte Rampengrafik nur auf dem Touchscreen-Hauptmonitor erscheint, während auf den über Videoausgänge angeschlossenen zusätzlichen Bildschirmen ein Schwarz-Weiß-Bild der Szene ohne Rampengrafik ausgegeben wird. Für die im Studio-Trickbereich benötigten Blue-/Green-Screen-Effekte wird die Grafikhardware zumindest teilweise eingesetzt. Sie übernimmt die Mischung entsprechender Bildteile, nachdem diese als durchsichtig bzw. opaque markiert worden sind.

Im folgenden wird anhand kommentierter Code-Beispiele beispielartig der Weg eines Bildes vom Auslösen der Aktion "Live Modus" von der Eingangsschicht über die zentrale Verwaltung und Transportschicht zur Anzeigeschicht nachgezeichnet. Bei den Codebeispielen befinden sich wichtige Beschreibungsinformationen zum Ablauf bzw. zu den einzelnen Funktionen jeweils in den mit "//" gekennzeichneten Kommentaren.

Das Anklicken des Buttons "Live-A" (GUI) führt zunächst zum Aufruf einer Funktion slotLiveA in der Klasse MainGUI:

```
 slotLiveA()
 {
   ...
   //Das Anwendungsobjekt besitzt zwei StateController, jeweils zustaendig für
   // Kanal A oder B

   // Controller B ausschalten
   _ctrlB->disable(true);
   // Controller A in LiveModus schalten
   _ctrlA->liveMode (lineA);
 ...
 }
```

Dabei wurde der StateController für Kanal B ausgeschaltet und derjenige für Kanal A in den Live-Modus geschaltet. Wie bereits erwähnt, ist jedem StateController-Objekt genau eine Canvas zugeordnet und es verfügt u.a. über Attribute und Funktionen, die das genaue Anzeigeziel angeben sowie die "interessanten" Kanäle, die evtl. zu überlagernden Live-Kanäle und den jeweiligen Modus (Live oder Aufnahme):

```
 class StateController
 {
      int _displayID;    // Wohin sollen Bilder für diesen StateController
      int _discPlayerID; // geschickt werden?
      int _canvasContainerNr;
      int _canvasNr;
      StatusType _state; // Kann u. a. sein: STATE_DISC, STATE_LIVE, STATE_REC

      ChannelList_channelList;        // Liste aller Live-Kanaele, fuer die sich
                                     // dieser StateController interessiert,
                                     // spaeter als Interessenliste bezeichnet

      bool _liveOverlayActive;
      ChannelList _overlayChannels; // Liste aller Live Kanaele, die dem Discbild
                                   // ueberlagert werden sollen (Merkhilfe)
 ...
      void disable(bool val);     // Controller ein/ausschalten
      void discMode();
      void livemode(SourceType channel); // In LiveModus schalten etc.
      void recMode(SourceType channel);
 ...
 }
```

Im hier beschriebenen Beispiel wurde der Live-Modus gewählt, daher wird nun die Funktion liveMode () näher betrachtet:

```
 StateController::liveMode(SourceType channel)
 {
   ...
   _state=STATE_LIVE; // In Livezustand wechseln
   // Wenn Kanal noch nicht in Interessenliste --> hinzufuegen
   if (!channelListContains(channel))
      {
      _channelList.clear();
      _channelList.append(channel);
      }
   // Nachricht an ResourceManager "Schalte ggf. GrabThread in Livemodus"
 emit startLive(channel);
   // Falls Overlay aktiv, fuege der _channelList alle Kanaele hinzu, die in der
   // overlayChannels-Liste stehen
   if (_liveOverlayActive)
      {
      addLiveoverlay(_overlayChannels);
      }
 }
```

Im Zuge dieser Funktion wird in den Livezustand gewechselt, der Interessenliste wird der gewählte Kanal (soweit nicht bereits enthalten) hinzugefügt und an den ResourceManager wird die Nachricht startLive (Kanal) geschickt - sie wird von der folgenden Funktion empfangen:

```
 ResourceManager::slotStartLive(SourceType source)
 {
 GrabThreadList::Iterator it;
 ...
   // GrabThread fuer den uebergebenen Kanal holen
   it=_grabThread.at(source);
   // GrabThread in LiveModus schalten
  (*it)->startShowing();
 ...
 ...
 }
```

Der bisher geschilderte Ablauf diente zur Beschreibung desjenigen, was unmittelbar an Voreinstellungen im System passiert, wenn auf den "Live-A" Button gedrückt wird. Im folgenden wird nun weiter erklärt, wie die Bilder vom GrabThread über die zentrale Verwaltung und Transportschicht auf das Display kommen.

Der Aufruf der Funktion GrabThread : : startShowing () weckt ggf. den Thread auf. Er beginnt in einer Endlosschleife damit, Bilder von einer Framegrabberkarte auszulesen. Aus jedem ausgelesenen Bild wird eine Nachricht erzeugt, die letztlich im ResourceManager landet. Der ResourceManager sieht stark vereinfacht wie folgt aus, wobei insbesondere die Funktion slotDispatch () von zentraler Bedeutung ist, da in ihr die individuellen Pakete, d.h. die ShowPackages, für die Anzeige zusammengestellt werden (siehe hierzu weiter unten):

```
 class ResourceManager
 {
 private:
 MovieManager* _mm;                   // Verwalter aller Takes
 DisplayControllerList _displays;     // Liste aller Displaycontroller
 StateControllerList _stateControls;  // Liste aller StateController;
 GrabThreadList _grabThread;          // Liste aller GrabThreads
 ShowItemList _lastGrabImage;        // Liste aller zuletzt empfangenen
                                     // Bilder von den GrabThreads
                                    //(Ein Bild pro Thread)
 DiscPlayerList _discPlayers;       // Liste aller DiscPlayer
 ShowPackageList _lastShowPacks;    // Liste aller zuletzt von den
                                    // DiscPlayern empfangenen ShowPackages
                                    // (Ein Package pro DiscPlayer)
 bool _newInput;                    // Flag: Es ist ein neues Bild seit dem
                                    // letzten Versenden eingetroffen
 void handleShowImage(ShowImageEvent* ie);// Empfaengt Bilder von GrabThreads
 public slots:
 void slotShowPackage(int. ShowPackage);// Empfaengt Packages von DiscPlayern
 void slotDispatch(); // Zusammenstellung der Pakete fuer Anzeige
 void slotStartLive(SourceType source);
 void slotStopLive(SourceType source);
 void slotStartRecord(SourceType source);
 void slotStopRecord(SourceType source);
 };
```

Jedes Bild von den GrabThreads wird der folgenden Funktion zugeführt, in der es in ein ShowItem umgewandelt wird, das nun neben dem Bild auch die Liste der Anzeigeziele, also der ShowTargets, enthält:

```
 void ResourceManager: :handleShowImage(ShowImageEvent* ie)
 {
   ShowItemList::Iterator it;
   SourceType src;
  // Kanal aus dem Paket extrahieren
   src=ie->_srcNr;
   // Es gibt eine Liste aller zuletzt von den GrabThreads erhaltenen Bilder bzw.
   // hier schon der ShowItems
   it = _lastGrabImages.at(src);
      {
      // Bild in Liste kopieren, dabei Umwandlung in ein ShowItem!
      (*it)=ie->_image;
      _newInput=true;
      }
 }
```

Ansonsten geschieht hier nicht viel an Verarbeitung. Wie schon mehrfach erwähnt, sollte das Zusammenbauen des endgültigen ShowPackages nicht jedesmal angestoßen werden, wenn ein neues Bild (vom Grabber) oder Paket (vom DiscPlayer) eintrifft, weil sonst die Rechenlast für den Grafikprozessor (Grafikkarte) zu groß würde. Bei beispielsweise zwei Live-Kanälen A und B und einem DiscPlayer kommt im Schnitt alle 40ms/3=13ms ein neues Bild an. Diese Zeit ist im Durchschnitt zu kurz, um die Anzeige neu aufzubauen. Stattdessen wird alle 40 ms einmal ein "Gesamtpaket geschnürt". Der Auslöser hierfür ist einer der GrabThreads, der nach jedem empfangenen Bild neben dem Bild selbst auch einen "Impuls" überträgt, der die schon erwähnte zentrale Funktion slotDispatch(), in der die individuellen ShowPackages für die Anzeige zusammengestellt werden, anstößt. Bei dieser Funktion slotDispatch handelt es sich um das eigentliche "Herz" des erfinderischen Konzepts. Deshalb soll die Funktionsweise dieser zentralen Funktion hier zunächst in einer Art Pseudocode dargestellt werden:
Gibt es neue Bilder, die angezeigt werden sollten? Nein --> Funktion verlassen. Schleife ueber alle StateController:
   Soll das letzte Paket, das vom zugehoerigen DiscPlayer empfangen wurde, integriert werden?
      Ja: Fuege zu allen Items des zugeordneten ShowPackages das Target des aktuellen StateController hinzu (Container, Canvas)
   Interessiert sich der aktuelle StateController fuer irgendwelche Live-Bilder (_channelList hat Eintraege)?
      Ja: Schleife über alle Eintraege der Liste. Fuege Bild bzw. ShowItem des jeweiligen Kanals zum endgueltigen Paket hinzu. (Dieses befindet sich im DisplayController). Die Einfuegeoperation stellt sicher, dass dieses Bild nicht schon enthalten ist. Fuege Target zu diesem ShowItem hinzu.
Schleife ueber alle DisplayController
   Fuege alle DiscPlayer-Packages zum Gesamtpackage des DisplayControllers hinzu, das auf diesem Display angezeigt werden soll.

Nun der entsprechende tatsächliche Code der Funktion slotDispatch:

```
 void ResourceManager::slotDispatch()
 {
   int usedLayers;
  int displayID=1;
   int container, canvas;
   StatusType state=STATE_DISC;
   DisplayControllerList::Iterator displayIt;
   StateControllerList::Iterator stateIt;
   ChannelList::Iterator channelIt;
   ShowPackageList::Iterator lastPackIt;
   ShowItemList::Iterator grabImageIt;
   DisplayController::DiscPlayerIDMap::Iterator playerID_It;
 if (!-newInput) { return; } // Nichts neues angekommen
 ...
 // Schleife ueber alle StateController
 for (stateIt=_stateControls.begin(); stateIt!=_stateControls.end(); ++stateIt)
   {
   usedLayers=0;
   if ((*stateIt)->isDisabled()) continue;
   // Zu welchem Display(-Controller) gehoert der StateController?
   displayID=(*stateIt)->displayID();
   state=(*stateIt)->state();
   displayIT=_displays.at(displayID);
   // Container und Canvas des aktuellen Statecontrollers besorgen
    (*stateIt)->getCanvas(container, canvas);
   // Interessiert sich Container fuer das letzte
   //Disc-ShowPackage seines DiscPlayers?
   if (state==STATE_DISC)
      {
      // Fuege allen Items des lastShowPackages das Target hinzu
      //1.) Besorge lastShowPackage
      lastPackIt=getLastShowPackageIt((*stateIt)->discPlayerID());
      // Jedem Item wird ein Target hinzugefuegt mit
      //LayerNummer=Index des ShowItems
      (*lastPackIt).addTarget(container, canvas);
      // Eintrag in Merkliste im DisplayController, dass das Package
      // von diesem DiscPlayer spaeter (am Ende von Dispatch) in den
      // DisplayController kopiert werden muß
      (*displayIt)->noteDiscPlayerID((*stateIt)->discPlayerID());
      usedLayers=(*lastPackIt).itemCount();
     }
 // Interessiert sich Controller fuer Live-Bilder aus seiner ChannelList?
 // Schleife ueber alle Eintraege der ChannelList des Controllers
 for (channelIt=(*stateIt)-> channelList.begin();
 channelIt!=(*stateIt)->_channelList.end(); ++channelIt)
   {
      // Neues ShowItem erzeugen und dem ShowPackage des
      //Display-Controllers (!) hinzufuegen
      // Zunaechst live-Bild besorgen
      grabImageIt=_lastGrabImages.at((*channelIt));
      (*displayIt)->addItem((*grabImageIt), container, canvas, usedlayers);
      usedLayers++;
     }
 } // Ende der Schleife ueber alle StateController
 // DiscPlayer-ShowPackages, die in jedem DisplayController vorgemerkt sind,
   // endlich in den DisplayController kopieren (siehe oben "noteDiscPlayerID()").
   // Dann an Display emitieren...
   for (displayIt=_displays.begin(); displayIt!=_displays.end(); ++displayIt)
     {
      for (playerID_It=(*displayIt)->_notedDiscPlayers.begin();
           playerID_It!=(*displayIt)->_notedDiscPlayers.end(); ++playerID_It)
       {
        lastPackIt=getLastShowPackageIt(playerID It.data ());
        (*displayIt)->addDiscPackage((*lastPackIt));
       }
     (*displayIt)->emitPackage();
     }
   _newInput=false;
 }
```

Nachdem mit der Funktion slotDispatch auf diese Weise die "Pakete geschnürt" - d.h. die ShowPackages zusammengestellt - worden sind, überträgt die Funktion DisplayController: : emitPackage nun jedes fertige Paket an "sein" Display. Dort wird es von der Funktion slotShowPackage () empfangen:

```
 DisplayGL::slotShowPackage(ShowPackage package)
 {
   ShowItemList::Iterator ItemIt;
   ShowTargetList::Iterator TargetIt;
 ...
// Schleife ueber alle ShowItems im Paket
 for (ItemIt=package._itemList.begin();
  ItemIt!=package._itemList.end(); ItemIt ++)
   {
      // Schleife ueber alle Targets des aktuellen ShowItems
      for (TargetIt=(*ItemIt)._targetList.begin();
          TargetIt!=(*ItemIt)._tragetList.ent(); TargetIt++)
       {
          // Besorge das Layer-Objekt, das ueber das Target adressiert wird.
          // Es enthaelt die Koordinaten, wo es gezeichnet werden soll, und
          // diverse Informationen ueber das "Wie" (Effekte etc.).
          // Nicht unwichtig ist die "Adresse", wo die Bilddaten im
```

```
          // Grafikspeicher liegen, die auf diesem Layer erscheinen sollen.
          LayerInfoItem& layerInfo=getLayerInfo((*TargetIt)._containerNr,
                           (*TargetIt)._canvasNr, (*TargetIt)._layerNr);
          //Uebergabe diverser Werte, Auswertung spaeter
          // beim eigentlichen Zeichnen
          layerInfo._alphaBlending=(*ItemIt)._alphaBleding;
          layerInfo._effectsPossible=(*ItemIt).effectsPossible;
          ...
          // Uebertragung des Bildes als Textur in Grafikkartenspeicher, Textur-
          // Identifier im Layer-Objekt eintragen
          layerInfo._currentTextureIt=texMan.insertTexture((*ItemIt)._image,
           (*ItemIt)._id, layerInfo._currentTextureIt, ...);
             }
       }
   }
 paintGL();      // Hier erfolgt das eigentliche Zeichnen der Bilder
 swapBuffers(); // Tauscht den Buffer, in dem gerade gezeichnet wird, mit
                // dem angezeigten Buffer.
 }
```

Dabei enthält das Layer-Objekt, das über das Target adressiert wird, die Koordinaten, wo es gezeichnet werden soll, sowie diverse Informationen über die Art und Weise, wie es gezeichnet werden soll (also gewisse Effekte usw.). Eine wichtige Rolle dabei spielt auch die Adresse, wo genau die Bilddaten im Grafikspeicher liegen, die auf diesem Layer erscheinen sollen. In der in OpenGL implementierten Funktion paintGL () wird über eine Liste von Layer-Objekten iteriert. Gemäß den Einträgen in diesen Layer-Objekten (Position, Größe, Zoom-Faktor, Schwarz/Weiß etc.) werden die einzelnen Bilder als Textur auf Rechtecke projiziert und halb-transparent übereinander gezeichnet, sofern zu überlagernde Bilder vorhanden sind.

Damit ist der beispielartige Weg eines Bildes vom Auslösen der Aktion "Live Modus" von der Eingangsschicht über die zentrale Verwaltung und Transportschicht zur Anzeigeschicht vollständig nachvollzogen.

Die Benutzer-Oberfläche zur Steuerung, von der aus auch die obige Aktion "Live Modus" in Gang gesetzt wurde, enthält die schon aus dem Harddisk-Recorder "PSU"® bekannten Buttons und Anzeigeelemente. Sie setzt auf Benutzeraktionen hin z. B. die Variablen einiger statecontroller und sendet u.a. Signale an den ResourceManager (startLive (Kanal) , ... ) **,** den MovieManager (deleteTake (x),...) den DiscPlayer (play ( ),...) und das Display (hawk ( ), dual-View ( ) ,...).

Natürlich kann das oben beschriebene System um die Verwendung von Netzwerk-Clients erweitert werden. Serverseitig müssen dazu im ResourceManager so viele weitere statecontroller registriert sein, wie es Canvases auf den Clients gibt. Ein Proxy-Objekt empfängt Nachrichten über das Netzwerk und setzt z. B. die stateController-**Variablen** auf dem Server. Weiterhin muß es für jeden Client auch einen DiscPlayer auf dem Server geben, falls eine entkoppelte Wiedergabe gewünscht ist. Das Proxy-Objekt fungiert gleichzeitig als "Scheindisplay": Im ResourceManager gibt es für jeden Client einen eigenen DisplayController, über den die Pakete an den Client geschickt werden können.

Zusätzlich zur Bildausgabe steuert der ResourceManager auch den Sound, also die Tonaufzeichnung (2 Threads) und die Wiedergabe. Dazu verwaltet er die Soundgeräte (Sound-Device, Mixer). Jeder DiscPlayer benötigt dabei auch zwei Threads zur Sound-Wiedergabe, wobei ein Thread die Sound-Daten aus einer Datei liest und der andere die Sound-Daten an die Soundkarte zur Ausgabe weiterleitet.

## Patentansprüche

1. Verfahren zur Schaffung einer Datenstruktur zur Aufzeichnung, Verarbeitung und asynchronen Wiedergabe mehrerer unterschiedlicher Videoströme auf einem Computer, die von unterschiedlichen Quellen einlaufen,
- wobei die Wiedergabe innerhalb von Canvas Wiedergabefenstern auf mindestens einem Display erfolgt,
- und wobei jedes Display in einer zentralen ResourceManager Datenstruktur durch ein Displaycontroller Datenelement repräsentiert wird, wobei,
- jedem Display mindestens ein Canvas Datenelement zugeordnet wird sowie genau ein ShowPackage Datenelement, das eine Liste von auf diesem Display anzuzeigenden Showltem Datenelementen enthält, wobei
- jedes Showltem Datenelement genau einem Bild aus einem Videostrom zugeordnet ist und eine Liste von ShowTarget Datenelementen enthält, die jeweils genau einem Canvas Datenelement zugeordnet sind, welches das Canvas Wiedergabefenster bezeichnet, auf dem dieses Bild angezeigt werden soll, wobei
- jedem Canvas Datenelement genau ein StateController Datenelement zugeordnet wird, das dieses Canvas Datenelement über das ShowTarget Datenelement adressiert und angibt, welche Videoströme in dem *entsprechenden Canvas Wiedergabefenster* angezeigt werden sollen,
- wobei die Aktualisierung der Canvas Wiedergabefenster auf den Displays anhand einlaufender Bilder die folgenden Schritte umfaßt:
für jedes StateController Datenelements
und für jedes einlaufende Bild aus einem Videostrom :
- Abfragen des aktuellen StateController Datenelements, ob der Videostrom, aus dem das aktuelle einlaufende Bild stammt, in dem Canvas Wiedergabefenster angezeigt werden soll, das dem aktuellen StateController zugeordnet ist
- falls der Videostrom in dem entsprechenden Canvas Wiedergabefenster angezeigt werden soll und falls dem aktuellen einlaufenden Bild noch kein Showltem Datenelement zugeordnet ist, Erzeugung eines neuen Showltem Datenelements, das dem einlaufenden Bild zugeordnet wird, und
- Hinzufügen des dem aktuellen einlaufenden Bild zugeordneten Showltem Datenelements zur Liste der Showltem Datenelemente des zugehörigen ShowPackage Datenelements des aktuellen StateController Datenelements, sowie
- Hinzufügen des ShowTarget Datenelements des aktuellen StateController Datenelements zur Liste der ShowTarget Datenelemente des neuen Showltem Datenelements,

2. Verfahren nach Anspruch 1, **dadurch gekennzeichnet, daß** jedem Canvas Datenelement mindestens ein Layer Datenelement zugewiesen wird, in dem jeweils bildverändemde Attribute gesetzt werden können, und daß jedes ShowTarget Datenelement genau einem Canvas Datenelement und genau einem Layer Datenelement zugeordnet ist.

3. Verfahren nach einem der vorangegangenen Ansprüche, **dadurch gekennzeichnet, daß** weiterhin ein Proxy-Objekt vorgesehen ist, das Nachrichten über das Netzwerk empfängt und die Variablen für die StateController Datenelemente derjenigen Canvas Datenelemente setzt, die den über Clients angeschlossenen Displays zugeordnet sind.

4. Computerprogramm zur Schaffung einer Datenstruktur zur Aufzeichnung, Verarbeitung und asynchronen Wiedergabe mehrerer unterschiedlicher Videoströme, das in eine Datenverarbeitungsanlage geladen werden kann und bei seiner Ausführung die Schritte des Verfahrens nach einem der vorangegangenen Ansprüche ausführt.

5. Datenverarbeitungssystem, das Einrichtungen zum Ausführen der Schritte des Verfahrens nach einem der Ansprüche 1-3 umfaßt.

## Claims

1. A method of creating a data structure for the recording, processing and asynchronous showing on a computer of a plurality of different video streams arriving from different sources,
- said showing taking place within canvas windows on at least one display
- and each display being represented by a DisplayController data element within a central ResourceManager data structure,
- associating each display with at least one Canvas data element and precisely one ShowPackage data element containing a listing of ShowItem data elements to be shown on the respective display,
- associating each ShowItem data element with precisely one picture from a video stream and containing a list of ShowTarget data elements each associated with precisely one Canvas data element, said Canvas designating the show window on which the respective picture is to be displayed, and
- associating each Canvas data element with precisely one StateController data element which addresses this Canvas data element via the ShowTarget data element and indicates the video streams to be displayed in the corresponding Canvas show window,
- with the updating of the Canvas show windows on the displays for incoming pictures comprising the following steps:
- for each StateController data element and each incoming picture from a video stream:
- Interrogating the actual StateController data element as to whether the video stream originating the actually incoming pictures is to be displayed in the Canvas show window associated with the actual StateController;
- if the video stream is to be displayed in the corresponding Canvas show window and if the actually incoming picture does not yet have a ShowItem data element associated therewith: generating a new ShowItem data element and associating it with the incoming picture;
- adding the ShowItem data element associated with the actually incoming picture to the listing of the ShowItem data elements of the associated ShowPackage data element of the actual StateController data element; and
- adding the ShowTarget data element of the actual StateController data element to the listing of the ShowTarget data elements of the new ShowItem data element.

2. Method as in claim 1, **characterized by** associating with each Canvas data element at least one Layer data element in which picture-altering attributes can be set and by associating each ShowTarget data element with precisely one Canvas data element and at least one Layer data element.

3. Method as in any one of the preceding claims, **characterized by** additionally providing a proxy object adapted to receive messages from the network and to set the variables for the StateController data elements of the Canvas data elements associated with the displays connected through clients.

4. Computer program for creating a data structure for the recording, processing and asynchronous showing of a plurality of different video streams, said program capable of being loaded into a data processing system and, when executing, performing the steps of the method defined in any one of the preceding claims.

5. Data processing system comprising means for executing the steps of the method of any one of patent claims 1 to 3.

## Revendications

1. Procédé de création d'une structure de données pour l'enregistrement, le traitement et la reproduction asynchrone de plusieurs flux vidéo différents sur un ordinateur, qui arrivent de sources différentes,
- la reproduction s'effectuant à l'intérieur de fenêtres de reproduction Canvas sur au moins un écran,
- et chaque écran étant représenté dans une structure de données centrale ResourceManager par un élément de données de contrôleur d'écran, dans lequel,
- au moins un élément de données Canvas est associé à chaque écran ainsi qu'exactement un élément de données ShowPackage, qui comporte une liste d'éléments de données ShowItem à afficher sur cet écran,
- chaque élément de données ShowItem est attribué de manière unique à une image d'un flux vidéo et comporte une liste d'éléments de données ShowTarget, qui sont respectivement associés exactement à un élément de données Canvas, lequel élément désigne la fenêtre de reproduction Canvas, sur laquelle doit être affichée cette image,
- un unique élément de données StateController est attribué à chaque élément de données Canvas, lequel élément adresse cet élément de données Canvas par l'élément de données ShowTarget et indique les flux vidéo qui doivent être affichés dans la fenêtre de reproduction Canvas correspondante,
- l'actualisation des fenêtres de reproduction Canvas sur les écrans à l'aide d'images d'entrée comprenant les étapes suivantes :
- pour chaque élément de données StateController, et pour chaque image d'entrée d'un flux vidéo :
- interrogation de l'élément de données StateController actuel, pour savoir si le flux vidéo, dont provient l'image d'entrée actuelle, doit être affiché dans la fenêtre de reproduction Canvas, qui est attribuée au StateController actuel,
- si le flux vidéo doit être affiché dans la fenêtre de reproduction Canvas correspondante et si aucun élément de données ShowItem n'est encore attribué à l'image d'entrée actuelle, génération d'un nouvel élément de données ShowItem, qui est attribué à l'image d'entrée, et
- ajout de l'élément de données ShowItem, attribué à l'image d'entrée actuelle, à la liste des éléments de données ShowItem de l'élément de données ShowPackage correspondant de l'élément de données StateController actuel, ainsi que
- ajout de l'élément de données ShowTarget de l'élément de données StateController actuel à la liste des éléments de données ShowTarget du nouvel élément de données ShowItem.

2. Procédé selon la revendication 1, **caractérisé en ce qu'**au moins un élément de données Layer, dans lequel peuvent être respectivement stockés des attributs modificateurs d'image, est affecté à chaque élément de données Canvas, et **en ce que** chaque élément de données ShowTarget est associé à un unique élément de données Canvas et à un unique élément de données Layer.

3. Procédé selon l'une des revendications précédentes, **caractérisé en ce qu'**il est en outre prévu un objet proxy, qui reçoit des messages au travers du réseau et fixe les variables pour les éléments de données StateController des éléments de données Canvas, qui sont associés aux écrans raccordés par des clients.

4. Programme informatique pour la création d'une structure de données destinée à l'enregistrement, au traitement et à la reproduction asynchrone de plusieurs flux vidéo différents, lequel programme peut être chargé dans un ordinateur et réalise lors de son exécution les étapes du procédé suivant l'une des revendications précédentes.

5. Système de traitement de l'information, qui comprend des dispositifs pour l'exécution des étapes du procédé suivant l'une des revendications 1 - 3.
